# DEMANDE DE BREVET EUROPEEN

(11) **EP 4 659 578 A1**
(43) Date de publication de la demande: **10.12.2025**
(21) Numéro de dépôt: 24180552.2
(22) Date de dépôt: 06.06.2024
(51) Int. Cl.: A01N 1/00, A01N 63/14, A01N 65/22

(54) **COMPOSITION POUR LA CONSERVATION DES TISSUS**

(71) Demandeur: Bottalico, Eric, 06200 Nice (FR)
(72) Inventeur: Bottalico, Eric, 06200 Nice (FR)
(74) Mandataire: Barbot, Willy

(57) **Abrégé**

La présente invention concerne une composition qui comprend une propolis, un extrait *d'Origanum vulgare,* un extrait de *Thymus vulgaris,* un alcool et un agent pénétrant, laquelle se révèle particulièrement utile pour la conservation des tissus et organes, notamment en ce qui concerne les échantillons biologiques destinés à une analyse par une technique histologique.

## Description

### Domaine de l'invention

L'invention vise le domaine de la conservation et concerne une composition qui peut notamment être utilisée en lien avec les techniques histologiques et également avec les techniques de soins de conservation des corps.

### Art antérieur

Le formol ou formaldéhyde est un composé organique de la famille des aldéhydes, dont il est le membre le plus simple. À température ambiante, il se présente sous la forme d'un gaz de nature inflammable. Présent de façon ubiquitaire, on le retrouve largement dans les produits résultants de la combustion incomplète de substances contenant du carbone. A ce titre, on le retrouve dans la fumée de feux de forêt, dans les rejets de centrales électriques thermiques, d'incinérateurs, de raffineries, de chaudières industrielles aussi bien que dans les gaz d'échappement de véhicules automobiles ou dans la fumée du tabac. Maintenant, le formol est également très présent au sein des bâtiments (bien plus que dans l'air extérieur). Cette forte présence résulte de l'utilisation de colles dans la construction dont de très nombreux types (de colle) relarguent du formol après application.

Plus généralement, on trouve le formol dans un très grand nombre d'industries.

Dans l'industrie chimique, le formol est ainsi utilisé comme précurseur pour la fabrication de nombreuses résines (résine urée-formaldéhyde, mélamine, et résine phénol-formaldéhyde), mais également dans la fabrication de peintures ou encore d'explosifs.

Dans l'industrie pharmaceutique, il est utilisé comme conservateur (dans certains vaccins) mais également comme fixateur (en lien avec sa fonction de conservateur) pour des échantillons biologiques ou encore pour l'embaumement des cadavres.

Enfin, et en lien avec l'industrie agroalimentaire, le formol est répertorié comme conservateur sous le code E240 et peut être présent à ce titre à faibles doses dans l'alimentation humaine (ex : des fruits et des légumes à des concentrations pouvant varier de 3 à 60 mg/kg). A noter que le formol est aussi utilisé dans cette industrie pour la désinfection (bâtiment d'élevage et installations), le plus souvent par nébulisation ou fumigation.

Malgré toutes ses applications, le formol présente de nombreux effets délétères pour la santé humaine et animale. Ainsi, il apparaît que le formol présente, outre des propriétés irritantes (au-dessus d'une concentration de 0,1 mg/kg dans l'air), des propriétés neurotoxiques, génotoxiques, cancérigènes ou encore reprotoxiques.

Au sein de l'Union européenne, le formol est ainsi classé de la manière suivante :
- cancérogénicité, catégorie 1B ;
- mutagénicité sur les cellules germinales, catégorie 2 ;
- toxicité aiguë par contact avec la peau ou par ingestion, catégorie 3 ;
- corrosion cutanée, catégorie 1B ;
- sensibilisation cutanée, catégorie 1.

Aussi, et même si les compositions à base de formaldéhyde restent très présentes aujourd'hui, il n'en existe pas moins un réel besoin d'identifier et de mettre au point des composions plus saines et plus écologiques qui permettent de pallier les inconvénients précités pour une ou plusieurs de ses applications.

### Sommaire de l'invention

C'est dans ce contexte que l'inventeur a obtenu, au terme d'un long développement, une composition qui s'avère capable de fixer et conserver des échantillons biologiques pendant plusieurs semaines, sans en altérer ni l'aspect (et notamment la couleur), ni plus généralement la structure.

De ce fait, l'inventeur a pu démontrer que cette composition se révèle particulièrement intéressante pour se substituer aux compositions à base de formol, pour ce qui est de la fixation et la conservation d'échantillons biologiques, notamment ceux destinés à une analyse par une technique histologique, comme l'immunohistochimie, l'immunofluorescence, l'hybridation *in situ.* A noter que même après évaporation de la solution, les échantillons biologiques ne montrent pas de dégradation.

En outre, l'inventeur a pu montrer que cette composition est particulièrement intéressante en ce qui concerne le traitement du corps des défunts en vue de leur présentation à la famille préalablement à la mise en bière. Ainsi, la composition selon l'invention permet également dans ce cadre de préserver le thanatopracteur de la toxicité inhérente à l'utilisation des compositions à base de formol.

En conséquence, un premier objet de l'invention porte sur une telle composition, laquelle comprend :
- une propolis, dont la teneur est inférieure à 1% (en poids sec de propolis par rapport au poids total de la composition)
- un extrait *d'Origanum vulgare,* dont la teneur est inférieure ou égale à 1 % (en poids par rapport au poids total de la composition)
- un extrait de *Thymus vulgaris,* dont la teneur est inférieure ou égale à 1 % (en poids par rapport au poids total de la composition)
- un alcool, avec une teneur d'au moins 20% (en poids d'alcool par rapport au poids total de la composition) ; et
- un agent pénétrant, avec une teneur d'au moins 20% (en poids par rapport au poids total de la composition.

Avantageusement, la composition selon l'invention ne comprend pas de formol.

Un deuxième objet de l'invention porte sur l'utilisation d'une telle composition pour la conservation des tissus ou des organes.

Selon un mode de réalisation préféré, cette utilisation vise la fixation et la conservation d'échantillons biologiques qui sont destinés à une analyse par une technique histologique.

Selon un autre mode de réalisation préféré, cette utilisation vise la réalisation de soins de thanatopraxie, éventuellement une telle utilisation peut être effectuée avec une composition diluée au 1/3, voir même jusqu'au 1/5.

Un troisième objet de l'invention porte sur une méthode de conservation et de fixation d'un échantillon biologique comprenant une étape de mise en contact dudit échantillon biologique avec une composition telle que décrite précédemment.

### Description détaillée de l'invention

Le mot propolis vient du grec ancien qui signifiait « *entrée d'une ville »*, par allusion à la réduction de l'entrée de la ruche avec de la propolis pour défendre la colonie.

Au sens de la présente invention, on entend par « propolis », la « propolis des abeilles », laquelle désigne un matériau complexe fabriqué par l'abeille européenne (*Apis mellifera*) à partir de résine végétale et de cire. Pour se faire, l'ouvrière transporte la résine translucide et visqueuse dans les corbeilles de ses pattes arrière (de la même façon que le pollen). Ces pelotes sont d'une couleur allant du jaune-clair au vert-brun. Celles-ci ne sont pas stockées dans les alvéoles mais utilisées aussitôt par les maçonnes. Ces dernières les modifient par l'apport de leurs propres sécrétions (cire et sécrétions salivaires principalement), et l'appliquent au besoin. Plus le milieu de vie de l'insecte est chaud et plus le pourcentage de cire sera important. De façon générale, la propolis est visqueuse et collante aux alentours de 20 °C et devient dure et cassante avec le froid, mais aussi avec le vieillissement. Au final, on trouvera une propolis plus concentrée au niveau du trou d'envol et sur la tête des cadres de la ruche.

Avantageusement, la teneur en propolis dans la composition est comprise entre 0,1% et 1% (en poids sec de propolis par rapport au poids total de la composition), de préférence entre 0,1% et 0,5% et, de manière particulièrement préférée entre 0,15% et 0,25%.

Le terme « extrait » comme utilisé dans le présent document fait référence à une substance extraite d'un produit naturel, indépendamment de sa méthode d'extraction ou de la composition des ingrédients. Par exemple, cela inclut ceux obtenus par extraction d'ingrédients solubles à partir d'un produit naturel en utilisant l'eau ou un solvant organique, ou ceux obtenus par l'extraction d'ingrédients spécifiques uniquement, tels que l'huile, à partir d'un produit naturel.

De préférence, l'extrait utilisé est une huile essentielle, laquelle est généralement obtenue par distillation selon des procédés classiques connus de l'homme du métier, et classiquement une extraction à la vapeur d'eau.

*Origanum vulgare* ou origan est une espèce de plantes herbacées vivace de la famille des Lamiacées. Ses plants atteignent généralement une taille qui varie entre 30 et 80 cm, dont les tiges rouges, à section carrée, sont velues avec des feuilles arrondies, vertes, légèrement dentées. Les fleurs enfin sont roses ou pourpres, et sont regroupées en petites panicules. Utilisée à titre de plante aromatique, la récolte de l'origan se fait en juillet et concerne aussi bien les fleurs, les tiges et les feuilles.

De préférence, l'extrait *d'Origanum vulgare* est un extrait de fleurs, de tiges et/ou de feuilles *d'Origanum vulgare,* de préférence il s'agit d'un extrait de fleurs *d'Origanum vulgare.*

Avantageusement, l'extrait *d'Origanum vulgare* est une huile essentielle *d'Origanum vulgare,* typiquement obtenue par distillation à la vapeur d'eau, de fleurs, de tiges et/ou de feuilles *d'Origanum vulgare,* de préférence par distillation à la vapeur d'eau de fleurs *d'Origanum vulgare.*

Avantageusement, la teneur en extrait *d'Origanum vulgare* dans la composition est comprise entre 0,1% et 1% (en poids par rapport au poids total de la composition), de préférence entre 0,3% et 0,7% et, de manière particulièrement préférée entre 0,4% et 0,6%.

*Thymus vulgaris* ou thym commun appartient lui aussi à la famille des Lamiacées et correspond à la plante dont est issu l'aromate avec la dénomination « thym » en cuisine. Cette plante correspond à un sous-arbrisseau (7 à 30 cm de hauteur) vivace, touffu et très aromatique que l'on retrouve largement autour de la méditerranée, des garrigues ensoleillées du sud de l'Europe jusqu'au du Nord de l'Afrique. Ses tiges, ligneuses à la base, herbacées supérieurement, sont presque cylindriques. Sa floraison a lieu d'avril à juillet avec des fleurs très petites et ovales qui font de 4 à 6 mm de longueur. Les plants de *Thymus vulgaris* sont sous-divisés en fonction de leur niveau d'expression de certains composés aromatiques (terpènes), on parle de « chimiotypes ». A titre d'exemple, on trouve ainsi des chimiotypes thymol, carvacrol, linalol, thuyanol, géraniol ou encore paracymène.

De préférence, *Thymus vulgaris* dont l'extrait est utilisé appartient au chimiotype thymol.

Avantageusement, l'extrait de *Thymus vulgaris* est une huile essentielle de *Thymus vulgaris*, laquelle est typiquement obtenue par distillation à la vapeur d'eau de *Thymus vulgaris*,

Avantageusement, la teneur en extrait de *Thymus vulgaris* dans la composition est comprise entre 0,1% et 1% (en poids par rapport au poids total de la composition), de préférence entre 0,3% et 0,7% et, de manière particulièrement préférée entre 0,4% et 0,6%.

Au sens de la présente invention, on entend par « alcool », un composé organique dont l'un des atomes de carbone est lié à un groupe hydroxyle (-OH). A titre d'exemples d'alcools utilisables, on pourra citer le méthanol, l'éthanol, ou encore l'isopropanol avec une préférence pour l'éthanol et l'isopropanol et, de manière particulièrement préférée, l'alcool utilisé sera l'éthanol.

Avantageusement, la teneur en alcool dans la composition est comprise entre 20 % et 50% (en poids par rapport au poids total de la composition), de préférence entre 25 % et 40 % et, de manière particulièrement préférée entre 30 % et 35 %.

Par « agent pénétrant », on désigne un composé capable de transporter les liquides par drainage et capillarité. Parmi les agents pénétrants utilisables dans la composition selon l'invention, on peut citer le sorbitol, l'éthylène glycol, le propylène glycol, le glycérol et la glycérine.

Avantageusement, la teneur en extrait en agent pénétrant dans la composition est comprise entre 20% et 50% (en poids par rapport au poids total de la composition), de préférence entre 30% et 40%.

Selon un mode de réalisation particulier, l'agent pénétrant est un mélange de propylène glycol et de glycérine.

Avantageusement, la teneur en propylène glycol dans la composition est comprise entre 25% et 40% (en poids par rapport au poids total de la composition), de préférence entre 25% et 35% et, de manière particulièrement préférée, d'environ 30%.

Avantageusement encore, la teneur en glycérine dans la composition est comprise entre 1% et 10% (en poids par rapport au poids total de la composition), de préférence entre 3% et 7% et, de manière particulièrement préférée, d'environ 5%.

Selon un autre mode de réalisation préférée, la composition selon l'invention comprend en outre du sel de bore, avec une teneur inférieure ou égale à 0,1% (en poids par rapport au poids total de la composition).

Le sel de bore est un produit chimique à base de borax qui est bien connu de l'homme du métier et qui est utilisé dans le domaine pharmaceutique comme antiseptique, pour la conservation des aliments dans certains pays, mais également dans le domaine de la construction pour conférer une meilleure résistance au feu aux matériaux qui le contiennent.

Avantageusement, la teneur en extrait en sel de bore dans la composition est comprise entre 0,01% et 0,1% (en poids par rapport au poids total de la composition), de préférence entre 0,03% et 0,07% et, de manière particulièrement préférée entre 0,04% et 0,06%.

Un autre objet de l'invention porte sur l'utilisation d'une composition de l'invention pour la conservation des tissus ou des organes.

Par « conservation », on désigne la stabilisation de l'état du tissu ou organe dans le temps.

Selon un mode de réalisation préféré, l'utilisation selon l'invention vise la fixation et la conservation d'échantillons biologiques qui sont destinés à une analyse par une technique histologique, comme l'immunohistochimie, l'immunofluorescence, l'hybridation in situ.

La solution de l'invention permet alors d'éviter l'utilisation d'une solution à base de formol tout en permettant l'obtention d'échantillons biologiques parfaitement utilisables par une technique histologique (maintien de la structure et de l'aspect de l'échantillon biologique).

De préférence, l'utilisation selon l'invention vise à l'obtention d'échantillons biologiques destiné à un enrobage par la paraffine.

De tels échantillons sont par la suite préparés sous forme de coupes (réalisées avec l'aide d'un microtome) de quelques microns déposées sur lame. Les lames sont ensuite utilisées dans différentes techniques d'histologie, le plus généralement en immunohistochimie ou en immunofluorescence.

Selon un autre mode de réalisation préféré, l'utilisation selon l'invention vise la réalisation de soins de thanatopraxie.

Par « thanatopraxie », on désigne l'ensemble des moyens et techniques mis en oeuvre pour assurer le traitement et la conservation des corps de défunts. La thanatopraxie a pour but d'effacer les effets visibles de la thanatomorphose (étapes de la mort), en retardant les phénomènes de décomposition post-mortem et ainsi permettre la conservation temporaire du cadavre dans des conditions d'hygiène et d'esthétique optimales.

Dans ce cadre, dans l'utilisation de la composition de l'invention peut se faire par injection (artérielle ou dans les cavités cardiaques et/ou abdominales et/ou pulmonaires).

Un autre objet de l'invention porte enfin sur une méthode de conservation et de fixation d'un échantillon biologique comprenant une étape de mise en contact dudit échantillon biologique avec la composition selon l'invention.

Par « échantillon biologique », on désigne un fragment de tissu ou d'organe, lequel peut correspondre à une biopsie d'un patient par exemple.

Typiquement, cette étape de mise en contact est réalisée par immersion dudit échantillon dans un bain de la composition selon l'invention, laquelle immersion se fait pendant un temps suffisant de sorte à assurer la conservation et la fixation dudit échantillon biologique.

A ce titre, cette étape de mise en contact pour être réalisée pendant une durée comprise d'au moins 1 heure, typiquement entre 1 et 48 heures, de préférence entre 2 et 24 heures.

Généralement, cette étape se fait à température ambiante, mais elle peut être réalisée à plus faible température (plus de 0°C) et, dans ce cas, nécessitera un temps plus long.

Les exemples suivants sont donnés uniquement à titre d'illustration de l'objet de la présente invention dont ils ne constituent en aucune manière une limitation.

### Exemples

### Préparation de l'ANTOLIS

La fabrication de la composition selon l'invention, avec la dénomination ANTOLIS, est décrite ci-après pour 10kg de composition (environ 10 litres).

3,5 grammes de sel de bore sont dissous dans 3 176,5 grammes d'eau déminéralisée, laquelle eau est ensuite mélangée avec 3 200 grammes d'éthanol à 96%.

Au mélange obtenu sont ensuite additionnés successivement 20 grammes d'extrait sec de propolis, 50 grammes d'huile essentielle de Thym, 50 grammes d'huile essentielle d'origan, 550 grammes de glycérine et enfin 2 950 de propylène glycol sous forte agitation.

Au terme de l'agitation, la solution présente quelques résidus qui sont éliminés par filtration (typiquement à 150 microns) avant conditionnement en bidon.

La solution hydroalcoolique obtenue est translucide de couleur jaune clair et peut être stockée à température ambiante à l'abri de la lumière.

Une composition témoin a été préparée selon le protocole décrit dans les exemples du brevet Français FR 3073125 B1 qui présente une concentration très élevée en propolis (supérieure à 15%).

### Conservation des tissus

Un cube de viande de boeuf de 4cm² est immergé dans la composition ANTOLIS ou dans la composition témoin, puis maintenu à température ambiante pendant 4 années. Ce test a également été effectué sur 6 mois dans un laboratoire d'Anapath par comparaison avec des pièces opératoires fixées au formol, qui se sont elles aussi révélées sans altération ni décomposition, ce qui indique bien que ANTOLIS a des propriétés de fixation similaires à celle du Formol.

Les résultats montrent que la composition ANTOLIS, bien que présentant une teneur en propolis très inférieure, permet d'assurer une parfaite conservation du tissu dans le temps. Simultanément, aucune coloration du morceau de viande n'est révélée dans le temps à la différence de celle résultant de l'immersion prolongée dans la composition témoin.

### Utilisation en histologie

Un échantillon biologique prenant la forme d'un cube de moins d'un centimètre d'arête est immergé dans un volume au moins 10 à 15 fois supérieur de composition ANTOLIS et, à titre de contrôle dans du formol (10%) à pH neutre tamponné au phosphate. Cette immersion est maintenue pendant 24 heures avant de procéder à une déshydratation du tissu.

Pour se faire, les tissus fixés dans l'ANTOLIS ou dans le formol font l'objet de passages successifs en bains d'alcool à 50%, 70%, 95% puis 100% d'alcool. Les tissus sont ensuite immergés dans des bains de xylène avant de faire l'objet d'un enrobage dans la paraffine.

Après enrobage, les tissus sont placés dans un microtome pour la réalisation de coupes d'épaisseur d'environ 5 microns (après dégrossissage du tissu inclus, à 20 microns) et les étaler sur des lames de verre.

Les lames de verre, ainsi obtenues à partir des échantillons, sont ensuite réchauffées avec une colle semi-liquide pour éviter tout décollement, pour ensuite être colorées par l'HES (Hématoxyline-Eosine- Safran) pour pouvoir être interprétées en histologie à l'aide d'un microscope biologique.

Les résultats montrent que la composition ANTOLIS permet d'obtenir des coupes similaires à celles obtenues avec le formol et qu'elle n'engendre aucune coloration, ni altération en général de nature à compromettre l'analyse des résultats histologiques.

Au final, il apparaît que la composition ANTOLIS constitue une voie alternative aux compositions à base de formol pour la conservation et la fixation des échantillons biologiques en vue de leur utilisation dans une technique histologique, notamment en ce qui concerne les échantillons destinés à un enrobage en paraffine.

### Conservation des corps

La composition ANTOLIS est utilisée pure à raison de 1 à 3 litres de composition pour un corps de corpulence moyenne ou standard.

Dans le cas d'une injection artérielle, celle-ci peut être réalisée dans les artères fémorales ou carotides primitives ou axillaires. Dans ce cas, il est recommandé de pratiquer une injection lente et constante. Un drainage cardiaque peut également s'avérer nécessaire.

En conclusion, les exemples montrent que la composition ANTOLIS possède une bonne efficacité en termes de conservation/fixation des tissus, sans en modifier ni l'aspect (notamment couleur), ni la structure en général ce qui la rend particulièrement intéressante que ce soit dans le cadre de conservation/fixation d'échantillons biologiques destinés à une analyse par une technique histologique mais également dans le cadre d'un soin de thanatopraxie.

## Revendications

1. Une composition qui comprend :
- une propolis dont la teneur est inférieure à 1% (en poids sec de propolis par rapport au poids total de la composition) ;
- un extrait *d'Origanum vulgare*, dont la teneur est inférieure ou égale à 1 % (en poids par rapport au poids total de la composition) ;
- un extrait de *Thymus vulgaris*, dont la teneur est inférieure ou égale à 1 % (en poids par rapport au poids total de la composition) ;
- un alcool, avec une teneur d'au moins 20% (en poids d'alcool par rapport au poids total de la composition) ; et
- un agent pénétrant, avec une teneur d'au moins 20% (en poids par rapport au poids total de la composition.

2. La composition selon la revendication 1, **caractérisée en ce qu'**elle ne comprend pas de formol.

3. La composition selon l'une quelconque des revendications 1 ou 2, **caractérisée en ce que** la teneur en propolis dans la composition est comprise entre 0,1% et 1% (en poids sec de propolis par rapport au poids total de la composition), de préférence entre 0,1% et 0,5% et, de manière particulièrement préférée, entre 0,15% et 0,25%.

4. La composition selon l'une quelconque des revendications 1 à 3, **caractérisée en ce que** la teneur en :
- extrait *d'Origanum vulgare* dans la composition est comprise entre 0,1% et 1% (en poids par rapport au poids total de la composition), de préférence entre 0,3% et 0,7% et, de manière particulièrement préférée entre 0,4% et 0,6% ; et/ou
- la teneur en extrait de *Thymus vulgaris* dans la composition est comprise entre 0,1% et 1% (en poids par rapport au poids total de la composition), de préférence entre 0,3% et 0,7% et, de manière particulièrement préférée entre 0,4% et 0,6%.

5. La composition selon l'une quelconque des revendications 1 à 4, **caractérisée en ce que** l'alcool est de l'éthanol avec, de préférence, une teneur en alcool dans la composition comprise entre 20 % et 50%.

6. La composition selon l'une quelconque des revendications 1 à 5, **caractérisée en ce que** l'agent pénétrant est choisi dans le groupe comprenant le sorbitol, l'éthylène glycol, le propylène glycol, le glycérol et la glycérine,

7. La composition selon l'une quelconque des revendications 1 à 6, **caractérisée en ce que** la teneur en extrait en agent pénétrant dans la composition est comprise entre 20% et 50% (en poids par rapport au poids total de la composition), de préférence entre 30% et 40%.

8. La composition selon l'une quelconque des revendications 1 à 7, **caractérisée en ce que** l'agent pénétrant est un mélange de propylène glycol et de glycérine et **en ce que**:
- la teneur en propylène glycol dans la composition est comprise entre 25% et 40% (en poids par rapport au poids total de la composition), et
- la teneur en glycérine dans la composition est comprise entre 1% et 10% (en poids par rapport au poids total de la composition).

9. La composition selon l'une quelconque des revendications 1 à 8, **caractérisée en ce qu'**elle comprend en outre du sel de bore, avec une teneur inférieure ou égale à 0,1% (en poids par rapport au poids total de la composition).

10. La composition selon la revendication précédente, **caractérisée en ce que** la teneur en extrait en sel de bore dans la composition est comprise entre 0,01% et 0,1% (en poids par rapport au poids total de la composition).

11. Une utilisation d'une composition telle que définie à l'une quelconque des revendications 1 à 10 pour la conservation des tissus ou des organes.

12. L'utilisation selon la revendication précédente, **caractérisée en ce qu'**elle vise la fixation et la conservation d'échantillons biologiques qui sont destinés à une analyse par une technique histologique.

13. L'utilisation selon la revendication précédente, **caractérisée en ce qu'**elle vise à l'obtention d'échantillons biologiques destinés à un enrobage par la paraffine.

14. L'utilisation selon la revendication 11, **caractérisée en ce qu'**elle vise la réalisation de soins de thanatopraxie.

15. Une méthode de conservation et de fixation d'un échantillon biologique comprenant une étape de mise en contact dudit échantillon biologique avec une composition telle que définie à l'une quelconque des revendications 1 à 10.
